# NEUE EUROPÄISCHE PATENTSCHRIFT

(11) **EP 0 687 593 B2**
(45) Veröffentlichungstag und Bekanntmachung des Hinweises auf die Entscheidung über den Einspruch: **05.09.2007**
(45) Hinweis auf die Patenterteilung: 15.09.1999
(21) Anmeldenummer: 95108454.0
(22) Anmeldetag: 02.06.1995
(51) Int. Cl.: B60R 16/02, B60Q 1/14

(54) **Elektrische Einrichtung für Kraftfahrzeuge, insbesondere Lenkstockschalter dafür**
Elektrical device for motor vehicles, in particular steering column switches therefor
Dispositif électrique pour véhicules automobiles, en particulier interrupteur monté sur la colonne de direction

(30) Priorität: 17.06.1994 DE 4422305
(43) Veröffentlichungstag der Anmeldung: 20.12.1995
(73) Patentinhaber: Leopold Kostal GmbH & Co. KG, 58507 Lüdenscheid (DE)
(72) Erfinder: Welchholz, Jörg, D-58849 Herscheid (DE); Widlitzki, Lothar, D-44577 Castrop-Rauxel (DE)

(56) Entgegenhaltungen:
- EP-A- 0 399 895
- DE-A- 3 532 532
- DE-C- 3 433 451
- FR-A- 2 690 285
- JP-U- 6 411 858
- US-A- 4 422 699
- US-A- 4 840 078
- US-A- 5 090 730

## Beschreibung

Die vorliegende Erfindung geht von einer entsprechend dem Oberbegriff des Hauptanspruches konzipierten elektrischen Einrichtung aus.

Derartige Einrichtungen sind dafür vorgesehen, um einerseits über den bzw. die Lenkstockschalter verschiedene am Kraftfahrzeug zu realisierende Funktionen wie beispielsweise Stand-/Fahrlicht, Fahrtrichtungsanzeige, Wischen/Waschen z.B. der Frontscheibe zu initiieren und um andererseits über die Signalübertragungsvorrichtung physikalischen Größen zu oder von im Lenkrad vorhandenen Funktionsgliedern zu übertragen. So wird z.B. über die Signalübertragungsvorrichtung das sogenannte Airbag-System versorgt und bestimmte Funktionen z.B. des Radios, des Autotelefons oder des Tempomaten ausgelöst bzw. beeinflußt.

Durch die US-PS 4,422,699 ist eine dem Oberbegriff des Hauptanspruches entsprechende elektrische Einrichtung bekanntgeworden, bei der zwei übereinander angeordnete, einer Haltevorrichtung zugeordnete, jeweils ein eigenes Gehäuse aufweisende Lenkstockschalter mit einer als Signalübertragungsvorrichtung dienenden Spiralkabelkassette über nietartige Verbindungsmittel unlösbar miteinander gekoppelt sind.

Eine solche Einrichtung bringt aber das Problem mit sich, daß dem Kraftfahrzeughersteller für die verschiedenen Ausstattungen seiner Fahrzeuge bzw. für verschiedene Modelle eine große Vielzahl von unterschiedlich ausgestalteten, d.h. den potentiellen Wünschen des Benutzers eines Kraftfahrzeuges entsprechend ausgeführten elektrischen Einrichtungen zur Verfügung gestellt werden muß bzw. daß derselbe diese lagermäßig in einem nicht unbeträchtlichen Umfang vorhalten muß.

Weiterhin ist durch die US-PS 4 840 078 eine elektrische Einrichtung bekannt geworden, die aus zwei an der Lenksäule eines Kraftfahrzeugs unterhalb des Lenkrades angeordneten Lenkstockschaltern und einer denselben zugeordneten, die Lenkspindel der Lenksäule konzentrisch umgebenden, ein ortsfest gehaltenes Statorteil und ein demgegenüber drehbeweglich gelagertes Rotorteil aufweisenden Signalübertragungsvorrichtung besteht. Dabei wird über ein an der Lenkspindel angeordnetes Zusatzteil einerseits durch einen damit verbundenen Rückstellnocken der eine der beiden Lenkstockschalter (Fahrtrichtungsanzeigeschalter) mittels einem daran vorgesehenen Rückstellfinger nach einer Betätigung wieder in seine Nullage zurückgestellt.
Andererseits wird über an dem Zusatzteil vorhandene Ansätze und Ausnehmungen sowohl eine formschlüssige Verbindung zum Rotorteil der Signalübertragungsvorrichtung als auch zum Lenkrad realisiert, wobei das Rotorteil noch über einen daran vorgesehenen Ansatz-mit einer am Lenkrad befindlichen Ausnehmung in Eingriff bringbar ist.

Schließlich ist durch die US-PS 5 090 730 eine für Kraftfahrzeuge bestimmte elektrische Einrichtung gemäß dem Oberbegriff des Patentanspruches 1 bekannt geworden, bei der eine die Lenkspindel konzentrisch umgebende, unterhalb des Lenkrades angeordnete Signalübertragungsvorrichtung vorhanden ist, die ein an der Lenksäule form- und/oder kraftschlüssig gehaltenes Statorteil und ein daran drehbeweglich gelagertes, mit dem Lenkrad verbundenes Rotorteil aufweist. Das Statorteil ist dabei so ausgebildet, daß daran zwei Lenkstockschalter formschlüssig festlegbar sind, wobei einer der Lenkstockschalter einen Rückstellfinger aufweist, der eine am Statorteil vorhandene Fensteröffnung durchgreift und mit einem mit der Drehbewegung der Lenkspindel sich drehenden Rückstellnocken kooperiert.

Aufgabe der vorliegenden Erfindung ist deshalb, eine elektrische Einrichtung der eingangs erwähnten Art derart weiterzubilden, daß auf einfache Art und Weise eine Vielzahl von beliebig aufgebauten Ausführungsformen realisierbar ist, die relativ einfach in Kraftfahrzeugen zu montieren sind.

Erfindungsgemäß wird die Aufgabe durch die im kennzeichnenden Teil des Hauptanspruches angegebenen Merkmale gelöst. Vorteilhaft bei einem solchen Aufbau ist, daß die einzelnen, in vielfältiger Ausführung vorhandenen Module der Baueinheit für sich vorprüfbar und recht einfach zu einem vom Käufer eines Kraftfahrzeuges gewünschten Gesamtprodukt verknüpfbar sind, das äußerst sinnfällig und ohne großen Aufwand im Kraftfahrzeug anzuordnen und mit den zugeordneten Komponenten - wie z.B. dem Lenkrad und dem darin befindlichen Airbag-System - zu verbinden ist.

Weitere vorteilhafte Ausgestaltungen des erfindungsgemäßen Gegenstandes sind in den Unteransprüchen angegeben und werden anhand eines in der Zeichnung dargestellten Ausführungsbeispieles näher erläutert. Dabei zeigt
- Fig. 1: einen prinzipiellen Aufbau der elektrischen Einrichtung und deren Zuordnung zu den damit kooperierende Kraftfahrzeugkomponenten in einer explosionsartigen Darstellung

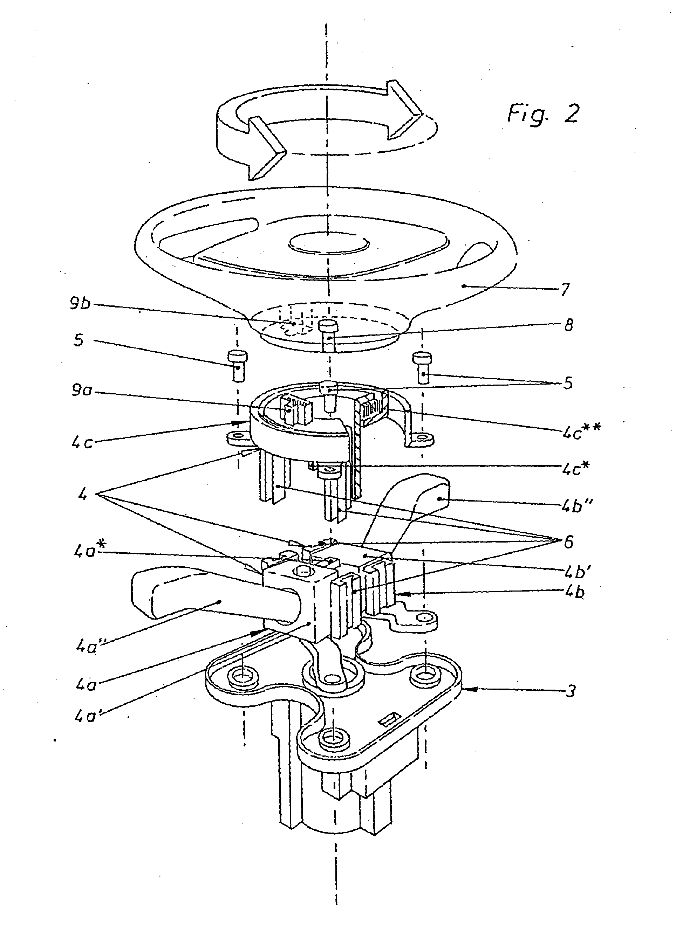

- Fig. 2: einen mehr oder weniger gegenständlichen Aufbau der Lenkstockschalter und der zugeordneten Signalübertragungsvorrichtung in explosionsartiger Darstellung.

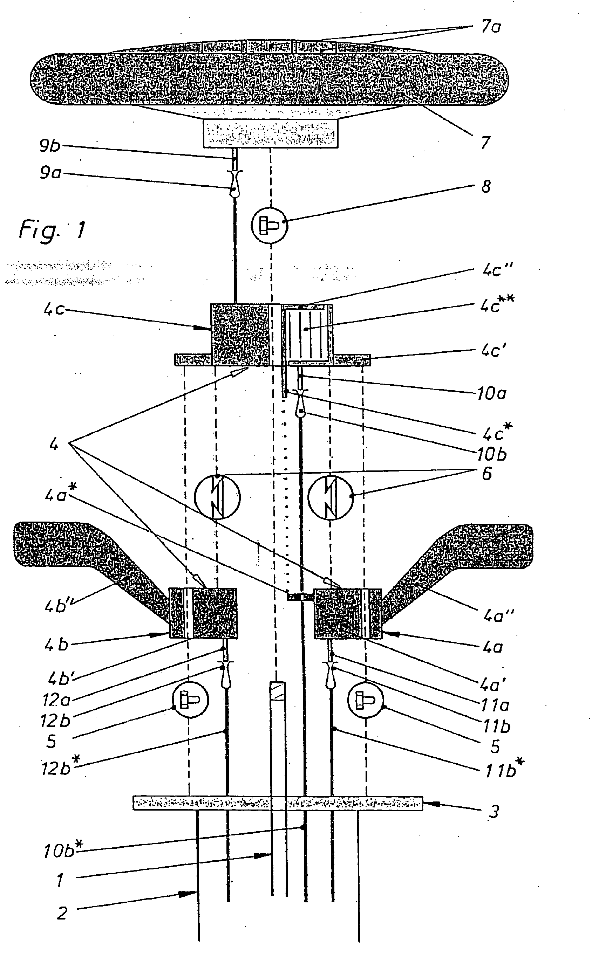

In Fig. 1 der Zeichnung sind zu realisierende mechanische Verbindungen gestrichelt und Wirkverbindungen gepunktet angedeutet.

Wie aus der Zeichnung hervorgeht, ist an der die Lenkspindel 1 umgebenden Lenksäule 2 eine als Trägerplatte ausgebildete Haltevorrichtung 3 befestigt. Auf der Trägerplatte wird eine aus zwei jeweils mit einem Gehäuse 4a',4b' und jeweils einem Schalthebel 4a",4b" versehene Lenkstockschaltern 4a,4b und einer Signalübertragungsvorrichtung 4c gebildete modulare Baueinheit 4 über Schraubmittel 5 kraftschlüssig festgelegt. Die beiden Lenkstockschalter 4a,4b und die Signalübertragungsvorrichtung 4c sind formschlüssig und zwar durch schwalbenschwanzartige Verbindungsmittel 6 einander zugeordnet. Aufgrund dessen sind problemlos beliebige Kombinationen der in relativ vielen Varianten zu produzierenden Bauteile 4a - 4c realisierbar. Die z.B. als Spiralkabelkassette ausgebildte Signalübertragungsvorrichtung 4c weist zwei, ein hohlzylinderisches Gehäuse bildende Gehäusteile 4c',4c" auf, die relativ zueinander verdrehbar sind. Dabei steht das eine (feststehende) Gehäuseteil 4c' mit den Lenkstockschaltern 4a,4b in lösbarer Verbindung, während das andere (drehbewegliche) Gehäuseteil 4c" einem Lenkrad 7 formschlüssig zugeordnet ist. Das Lenkrad 7 ist wiederum an der Lenkspindel 1 einerseits durch geeignete, der Einfachheit halber nicht dargestellte Profilierung formschlüssig und andererseits über Schraubmittel 8 kraftschlüssig gehalten.

In dem Lenkrad 7 ist - wie heutzutage in immer größerem Maße üblich - ein ebenfalls der Einfachheit halber nicht dargestelltes sogenanntes Airbag-System angeordnet, das ebenso wie andere im Lenkrad 7 vorhandene elektrische Bauteile 7a mit elektrischen Grö-ßen versorgt werden muß bzw. von denen elektrische Größen zu zugeordneten elektrischen Geräte bzw. Schaltungsanordnungen geliefert werden. Hierzu dienen die elektrischen Leiter des Spiralkabels 4c** der Spiralkabelkassette, deren aus dem drehbaren Gehäuseteil 4c" herausragende Enden über Steckverbindungsteile 9a mit an den elektrischen Leitern der Bauteile angeschlossenen Steckverbindungsteilen 9b verbunden sind. Die aus dem feststehenden Gehäuseteil 4c' herausragenden Enden der Leiter des Spiralkabels 4c** sind ebenfalls mit Steckverbindungsteilen 10a versehen, die über Gegen-Steckverbindungsteilen 10b mit einer elektrischen Zuleitung 10b* verbunden sind.

Die beiden Lenkstockschalter 4a,4b sind ebenfalls über Steckverbindungsteile 11a, 12a und Gegen-Steckverbindungsteile 11b, 12b mit durch die Trägerplatte geführten elektrischen Zuleitungen 11b*, 12b* verbunden. Die Trägerplatte kann mit einer elektrische/elektronische Bauelemente aufweisenden, der Einfachheit halber nicht dargestellten Leiterplatte versehen sein, wobei dann die Steckverbindungsteile vorteilhafterweise an der Trägerplatte anzuordnen sind.

Darüber hinaus ist an dem Lenkstockschalter 4a ein zur automatischen Rückstellung der Fahrtrichtungsanzeige in die Nullstellung vorgesehener Rückstellfinger 4a* vorhanden, der bei der Realisierung der modularen Baueinheit 4 mit einem am drehbeweglichen Gehäuseteil 4c" der Signalübertragungsvorrichtung 4c angeordneten Rückstellnocken 4c* in Eingriff kommt.

## Patentansprüche

1. Elektrische Einrichtung für Kraftfahrzeuge mit zumindest einem im Bereich der Lenksäule (2) unterhalb des an der Lenkspindel (1) befestigten Lenkrades (7) angeordneten, mit seinem Schalthebel (4a",4b") sich mehr oder weniger radial zur Lenkspindel (1) erstreckenden Lenkstockschalter (4a,4b), dem eine die Lenkspindel (1) zumindest partiell umgreifende, ortfest an der Lenksäule (2) angeordnete Haltevorrichtung (3) und eine mit zwei relativ zueinander verdrehbaren Gehäuseteilen (4c',4c") versehene, mit dem Lenkrad (7) verbundene, die Lenkspindel (1) konzentrisch umgebende Signalübertragungsvorrichtung (4c) zugeordnet ist, wobei der Lenkstockschalter (4a/4b) mit der Signalübertragungsvorrichtung (4c) durch formschlüssige Verbindung seines Gehäuses (4a' bzw. 4b') mit dem feststehenden Gehäuseteil (4c') der Signalübertragungsvorrichtung (4c) zu einer modularen Baueinheit (4) mechanisch zusammengefaßt ist, wobei die Baueinheit (4) an der Haltevorrichtung (3) kraft- und/oder formschlüssig festgelegt ist, **dadurch gekennzeichnet, dass** an dem mit der Drehbewegung des Lenkrades (7) sich verstellenden drehbeweglichen Gehäuseteil (4c") der Signalübertragungsvorrichtung (4c) ein Rückstellnocken (4c*) unmittelbar angeordnet ist, der einem an dem Lenkstockschalter (4a bzw. 4b) vorgesehenen, eine Rückstellung desselben in die Nullage bewirkenden Rückstellfinger (4a*) bei der Realisierung der Baueinheit (4) zugeordnet ist.

2. Elektrische Einrichtung nach Anspruch 1, **dadurch gekennzeichnet, daß** zwei sich mehr oder weniger diametral bzgl. der Lenkspindel (1) gegenüberliegend angeordnete Lenkstockschalter (4a bzw. 4b) vorhanden sind, die mit dem einen Gehäuseteil (4c*) der Signalübertragungsvorrichtung (4c) an voneinander abgewandten, auf den Umfang bezogenen Randbereichen desselben form- und/oder kraftschlüssig verbunden sind und daß einer der beiden Lenkstockschalter (4a) mit dem Rückstellfinger (4a*) versehen ist.

3. Elektrische Einrichtung nach Anspruch 1 oder 2, **dadurch gekennzeichnet, daß** der/die Lenkstockschalter (4a bzw. 4b) dem einen Gehäuseteil (4c') der Signalübertragungsvorrichtung (4c) über schwalbenschwanzartige Verbindungsmittel (6) zugeordnet ist/sind.

4. Elektrische Einrichtung nach einem der Ansprüche 1 bis 3, **dadurch gekennzeichnet, daß** die aus dem/den Lenkstockschafter(n) (4a bzw. 4b) und der Signalübertragungsvorrichtung (4c) gebildete Baueinheit (4) über Schraubmittel (5) an einer die Haltevorrichtung (3) bildenden Trägerplatte festgelegt ist.

5. Elektrische Einrichtung nach einem der Ansprüche 1 bis 3, **dadurch gekennzeichnet, daß** die aus dem/den Lenkstockschalter(n) (4a bzw. 4b) und der Signalübertragungsvorrichtung (4c) gebildete Baueinheit (4) über Schraubmittel- (5) an einer die Haltevorrichtung (3) bildenden, dem Lenkschloß zugeordneten Konsole festgelegt ist.

6. Elektrische Einrichtung nach einem der Ansprüche 1 bis 5, **dadurch gekennzeichnet, daß** das andere Gehäuseteil (4c") der Signalübertragungsvorrichtung (4c) mit dem Lenkrad (7) formschlüssig verbunden ist, das über Schraubmittel (8) an der Lenkspindel (1) kraftschlüssig befestigt ist.

7. Elektrische Einrichtung nach Anspruch 1 oder einem der folgenden, **dadurch gekennzeichnet, daß** die Signalübertragungsvorrichtung (4c) als Spiralkabelkassette ausgeführt ist, wobei die beiden Gehäuseteile (4c',4c") zu einem hohlzylinderischen Gehäuse zusammengefügt sind.

8. Elektrische Einrichtung nach Anspruch 7, **dadurch gekennzeichnet, daß** das in der Spiralkabelkassette vorhandene Spiralkabel (4c**) elektrische und/oder optische Leiter aufweist.

9. Elektrische Einrichtung nach einem der Ansprüche 1 bis 6, **dadurch gekennzeichnet, daß** die Signalübertragungsvorrichtung (4c) als Schleifkontaktkassette ausgeführt ist, wobei die beiden Gehäuseteile (4c',4c") zu einem hohlzylinderischen Gehäuse zusammenfügt sind.

10. Elektrische Einrichtung nach Anspruch 1 oder einem der folgenden, **dadurch gekennzeichnet, daß** die Signalübertragungsvorrichtung (4c) mit optoelektronischen Bauelementen versehen ist.

11. Elektrische Einrichtung nach einem der Ansprüche 1 bis 10, **dadurch gekennzeichnet, daß** den beiden Gehäuseteilen (4c',4c") der Signalübertragungsvorrichtung (4c) an das Spiralkabel (4c**) angeschlossene Steckverbindungsteile (9a,10a) zugeordnet sind, die mit einerseits am Lenkrad (7) und andererseits an einer Zuleitung (10b*) vorhandenen Gegen-Steckverbindungsteilen (9b,10b) verbindbar sind.

12. Elektrische Einrichtung nach Anspruch 11, **dadurch gekennzeichnet, daß** das an der Zuleitung (10b*) angeschlossene Gegen-Steckverbindungsteil (10b) an der Haltevorrichtung (3) befestigt ist.

13. Elektrische Einrichtung nach Anspruch 1 oder einem der folgenden, **dadurch gekennzeichnet, daß** die Haltevorrichtung (3) mit elektrischen Leiterbahnen versehen ist.

14. Elektrische Einrichtung nach einem der vorhergehenden Ansprüche, **dadurch gekennzeichnet, daß** die Leiterbahnen der Haltevorrichtung (3) über Steckverbindungsteile mit den Steckverbindungsteilen der Zuteilung und/oder den Steckverbindungsteilen der Lenkstockschalter (4a,4b) und/oder den Steckverbindungsteilen der Signalübertragungsvorrichtung (4c) verbunden sind.

15. Elektrische Einrichtung nach einem der Ansprüche 13 oder 14, **dadurch gekennzeichnet, daß** den in der Haltevorrichtung (3) vorhandenen Leiterbahnen elektrische/elektronische Bauelemente zugeordnet sind.

16. Elektrische Einrichtung nach Anspruch 15, **dadurch gekennzeichnet, daß** die in der Haltevorrichtung (3) vorhandenen Leiterbahnen und die elektrischen/elektronischen Bauelemente auf einer Leiterplatte angeordnet sind.

## Claims

1. Electrical device for vehicles with at least one steering column switch (4a,4b) which is positioned in the region of the steering column (2) below the steering wheel (7) attached to the steering shaft (1) and the operating lever (4a",4b") of which extends more or less radially to the steering shaft (1) and to which a retention device (3) is assigned which at least partially encircles the steering shaft (1) and is attached in a fixed position to the steering column (2) and a signal transmitting facility (4c) which is equipped with two enclosure elements (4c',4c") that are rotatable in relation to each other and which is connected to the steering wheel (7), encircling the steering shaft (1) concentrically, for which purpose the steering column switch (4a/4b) is mechanically joined to the signal transmitting facility (4c) by way of the form-fit joining of its enclosure (4a' or 4b' as the case may be) to the fixed enclosure element (4c') of the signal transmitting facility (4c) to form a modular constructional unit (4), for which the constructional unit (4) is positioned on the retention device (3) in an interlocking or friction-fit manner, **characterized by** the fact that a restoring cam (4c*) is arranged directly on the rotating enclosure element (4c") of the signal transmitting facility (4c) moving together with the rotating motion of the steering wheel (7), which is assigned to a restoring finger (4a*) provided on the steering column switch (4a or 4b) to effect the restoration of the same into the neutral position when realizing the constructional unit (4).

2. Electrical device in accordance with claim 1, **characterized by** the fact that there are two steering column switches (4a or 4b as the case may be) which are arranged more or less diametrically on either side of the steering shaft (1) each with one enclosure element (4c*) of the signal transmitting facility (4c) connected to the circumferential edge zones of the same in an interlocking or friction-fit manner and that one of the two steering column switches (4a) is equipped with the restoring finger (4a*).

3. Electrical device in accordance with claim 1 or 2, **characterized by** the fact that the steering column switch or switches (4a and/or 4b) cooperate(s) with one enclosure element (4c') of the signal transmitting facility (4c) by way of dovetailed fastening means (6).

4. Electrical device in accordance with one of claims 1 to 3, **characterized by** the fact that the constructional unit (4) formed by the steering column switch or switches (4a and/or 4b) and the signal transmitting facility (4c) is attached by screwed fastening means (5) to a support plate which constitutes the retention device (3).

5. Electrical device in accordance with one of claims 1 to 3, **characterized by** the fact that the constructional unit (4) formed by the steering column switch or switches (4a and/or 4b) and the signal transmitting facility (4c) is attached by screwed fastening means (5) to a bracket assigned to the steering column lock, constituting the retention device (3).

6. Electrical device in accordance with one of claims 1 to 5, **characterized by** the fact that the other enclosure element (4c") of the signal transmitting facility (4c) is joined in an interlocking manner to the steering wheel (7) which is fastened by screwed fastening means (8) to the steering shaft (1) in a friction-fit manner.

7. Electrical device in accordance with claim 1 or one of the following claims, **characterized by** the fact that the signal transmitting facility (4c) is designed as a coiled cable cassette, whereby the two enclosure elements (4c',4c") are joined to constitute a hollow cylindrical enclosure.

8. Electrical device in accordance with claim 7, **characterized by** the fact that the coiled able (4c^{**}) contained in the coiled cable cassette is equipped with electric or optical conductors.

9. Electrical device in accordance with one of claims 1 to 6, **characterized by** the fact that the signal transmitting facility (4c) is designed as a sliding-action contact cassette, whereby the two enclosure elements (4c', 4c") are joined to constitute a hollow cylindrical enclosure.

10. Electrical device in accordance with claim 1 or one of the following claims, **characterized by** the fact that the signal transmitting facility (4c) is equipped with opto-electronic components.

11. Electrical device in accordance with ne of claims 1 to 10, **characterized by** the fact that the two enclosure elements (4c', 4c") f the signal transmitting facility (4c) are assigned to the plug-type connectors (9a, 10a) attached to the coiled cable (4c^{**}) which can be connected on the one hand to the steering wheel (7) and on the other hand to mating connectors (9b, 10b) attached to an electric feeder cable (10b^{*}).

12. Electrical device in accordance with claim 11, **characterized by** the fact that the mating connector (10b) attached to the electric feeding cable (10b^{*}) is connected to the retention device (3).

13. Electrical device in accordance with claim 1 or with one of the following claims, **characterized by** the fact that the retenttion device (3) is equipped with electric printed conductors.

14. Electrical device in accordance with one of the previous claims, **characterized by** the fact that the printed conductors of the retention device (3) are connected by way of plug-type connectors with the mating connectors of the electric feeding cable and/or the mating connectors of the steering column switches (4a, 4b) and/or the mating connectors of the signal transmitting facility (4c).

15. Electrical device in accordance with claim 13 or claim 14, **characterized by** the fact that electric/electronic structural elements are assigned to the printed in the retention device (3).

16. Electrical device in accordance with claim 15, **characterized by** the fact that the printed conductors and the electric/electronic structural elements provided in the retention device (3) are arranged on a printed circuit board.

## Revendications

1. Dispositif électrique pour véhicules automobiles comprenant, au moins, un commutateur (4a, 4b) pour colonne de direction disposé dans la zone de la colonne de direction (2), au-dessous du volant (7) fixé sur l'arbre de direction (1), dont les leviers (4a", 4b") s'étendent plus ou moins radialement par rapport à l'arbre de direction (1), un dispositif de support (3), monté stationnairement sur la colonne de direction (2) et embrassant, au moins partiellement, l'arbre de direction (1), ainsi qu'un dispositif de transmission de signaux (4c), pourvu de deux pièces (4c', 4c") de boitier pivotantes par rapport l'une à l'autre, le dispositif de transmission de signaux (4c) étant raccordé au volant (7) et embrassant, concentriquement, l'arbre de direction (1), le commutateur (4a/4b) pour colonne de direction étant relié mécaniquement à la partie de boitier fixe (4c') du dispositif de transmission de signaux (4c) pour former avec elle une unité modulaire (4), l'unité modulaire (4) étant fixée au dispositif de support (3) par adhérence et / ou par crabotage, **caractérisé en ce que**, sur la partie de boitier mobile, pivotante (4c") du dispositif de transmission de signaux (4c), modifiant sa position en fonction du mouvement du volant (7), est directement agencé un mentonnet de rappel (4c*) qui coopère avec un doigt de rappel (4a*), prévu sur le commutateur (4a respectivement 4b) de la colonne de direction et remettant celui-ci à zéro, ce mentonnet de rappel (4c*), étant subordonné à ce doigt de rappel (4a*) lors de la réalisation de l'unité modulaire (4).

2. Dispositif électrique selon la revendication 1,
**caractérisé en ce que**
deux commutateurs (4a resp. 4b) pour colonne de direction, disposés à l'opposé l'un de l'autre, plus ou moins diamétralement quant à l'arbre de direction (1), sont prévus et sont reliés par crabotage et/ou par adhérence à la partie (4c^{*}) du boîtier du dispositif de transmission de signaux (4c) dans les zones marginales, opposées de celui-ci et que l'un des deux commutateurs (4a) est pourvu d'un doigt de rappel (4a^{*}).

3. Dispositif électrique selon la revendication 1 ou 2,
**caractérisé en ce que**
le/les commutateurs (4a resp. 4b) pour colonne de direction est/sont coordonné/s à la partie (4c") du boîtier du dispositif de transmission de signaux (4c) à l'aide de moyens de raccordement (6) en forme de queue d'aronde.

4. Dispositif électrique selon l'une des revendications 1 à 3,
**caractérisé en ce que**
l'unité modulaire (4), composée du/des commutateur/s (4a resp. 4b) pour colonne de direction et du dispositif de transmission de signaux (4c), est fixée, à l'aide d'auxiliaires de vissage (5), à un plaque d'appui formant le support (3).

5. Dispositif électrique selon l'une des revendications
**caractérisé en ce que**
l'unité modulaire (4), composée du/des commutateur/s (4a resp. 4b) pour colonne de direction et du dispositif de transmission de signaux (4c), est fixée, à l'aide d'auxiliaires de vissage (5), à une console coordonnée à l'anti-vol et formant le support (3).

6. Dispositif électrique selon l'une des revendications 1 à 5,
**caractérisée en ce que**
l'autre partie (4c") du boîtier du dispositif de transmission de signaux (4c) est raccordé géométriquement au volant (7) qui est fixé par adhérence à l'arbre de direction (1) à l'aide d'auxiliaires de vissage (8).

7. Dispositif électrique selon la revendication 1 ou l'une des revendications suivantes,
**caractérisé en ce que**
le dispositif de transmission de signaux (4c) est exécuté en forme de cassette à câble spiralé, les deux parties (4c', 4c") du boîtier étant assemblées pour former un boîtier cylindrique, creux.

8. Dispositif électrique selon la revendication 7,
**caractérisé en ce que**
le câble spiralé (4c^{**}), contenu dans la cassette, présente des conducteurs électriques et/ou optiques.

9. Dispositif électrique selon l'une des revendications 1 à 6,
**caractérisé en ce que**
le dispositif de transmission de signaux (4c) est exécuté en forme de cassette à contact glissant, les deux parties (4c', 4c") de boîtier étant assemblées pour former un boîtier cylindrique, creux.

10. Dispositif électrique selon la revendication 1 ou l'une des revendication suivantes,
**caractérisé en ce que**
le dispositif de transmission de signaux (4c) est équipé d'éléments optoélectroniques.

11. Dispositif électrique selon l'une des revendications 1 à 10,
**caractérisé en ce que**
des connecteurs à fiches (9a, 10a), reliés au câble spiralé (4c^{**}), sont raccordés aux deux parties (4c', 4c") du boîtier du dispositif de transmission de signaux (4c), ces connecteurs à fiches (9a, 10a) étant raccordables à des contre-fiches (9b, 10b) équipant d'une part, le volant (7) et, d'autre part, une conduite d'arrivée (10b^{*}).

12. Dispositif électrique selon la revendication 11,
**caractérisé en ce que**
la connecteur à fiche femelle (10b) de la conduite d'arrivée (10b^{*}) est fixé au dispositif de support (3).

13. Dispositif électrique selon la revendication 1 ou l'une des revendications suivantes,
**caractérisé en ce que**
le dispositif de support (3) est pourvu de voies de conducteurs électriques.

14. Dispositif électrique selon l'une des revendications précédentes,
**caractérisé en ce que**
traces de conducteurs du dispositif de support (3) sont reliées, à l'aide de connecteurs à fiches aux connecteurs à fiches de la conduite d'arrivée et/ou aux connecteurs à fiches des commutateurs (4a, 4b) de la colonne de direction et/ou aux connecteurs à fiches du dispositif de transmission de signaux (4c).

15. Dispositif électrique selon la revendication 13 ou 14,
**caractérisé en ce que**
des composants électriques/électroniques sont coordonnés aux traces de conducteurs comprises dans la dispositif de support (3).

16. Dispositif électrique selon la revendication 15,
**caractérisé en ce que**
les traces de conducteurs comprises dans le dispositif de support (3) et les composants électriques/électroniques sont disposés sur une plaquette imprimée.
